Europäisches Patentamt

European Patent Office

Office européen des brevets

(19)

(11) Numéro de publication : **0 054 479**
**B1**

(12) # FASCICULE DE BREVET EUROPÉEN

(45) Date de publication du fascicule du brevet :
24.04.85

(21) Numéro de dépôt : **81401961.8**

(22) Date de dépôt : **09.12.81**

(51) Int. Cl.⁴ : **B 23 G 1/18**, B 23 G 3/08

(54) **Dispositif automatique de taraudage sur presse mécanique.**

(30) Priorité : **12.12.80 FR 8026357**

(43) Date de publication de la demande :
**23.06.82 Bulletin 82/25**

(45) Mention de la délivrance du brevet :
**24.04.85 Bulletin 85/17**

(84) Etats contractants désignés :
**BE CH DE FR GB IT LI NL SE**

(56) Documents cités :
CH-A- 490 920
DE-C- 357 354
FR-A- 1 444 213
GB-A- 931 445
US-A- 2 346 297
US-A- 2 715 233
US-A- 3 162 873
US-A- 3 193 859

(73) Titulaire : **CENTRE TECHNIQUE DES INDUSTRIES MECANIQUES**
52, avenue Félix-Louat B.P. 67
F-60304 Senlis Cedex (FR)

**SEB S.A.**
F-21260 Selongey (FR)

(72) Inventeur : **Challer, Jean**
4 ter rue Emile Clermont
F-42100 Saint-Etienne (FR)

(74) Mandataire : **Loriot, Jacques et al**
c/o SA. FEDIT-LORIOT 38, avenue Hoche
F-75008 Paris (FR)

EP 0 054 479 B1

Jouve, 18, rue St-Denis, 75001 Paris, France

**Description**

On fabrique couramment des pièces en tôle sur des presses mécaniques à découper, par exemple des presses à excentrique, au moyen d'outils multiples qui, dans un premier poste, poinçonnent des trous dans une bande de tôle et, dans un poste suivant, découpent des pièces, de telle façon que les pièces tombent séparément presque terminées de la machine. On exécute souvent même un plus grand nombre d'opérations, par exemple, des cambrages, des relevages de pattes de fixation, et des opérations d'emboutissage des bords des trous (dit « crevé ») en vue d'une opération ultérieure de taraudage desdits trous.

C'est précisément cette opération de taraudage des trous que concerne la présente invention. Souvent, à cet effet, on reprend les pièces pour les faire passer sur une machine à tarauder, ce qui abaisse considérablement le rendement, car il faut, en effet, davantage de temps pour reprendre les pièces et les tarauder que pour les découper. Le travail à la presse est particulièrement économique, car il tombe une ou plusieurs pièces à chaque coup de presse, c'est pourquoi on a déjà cherché à tirer parti de cet avantage en exécutant le taraudage des pièces sur la presse même, immédiatement après leur poinçonnage, avant qu'elles ne soient découpées, ce qui évite la reprise des pièces pour les tarauder.

Pour exécuter ce genre de travail on a proposé d'utiliser un dispositif qui comporte une broche rotative porte-taraud, que l'on monte sur le porte-outil de la presse, l'entraînement en rotation de la broche porte-taraud étant assuré à partir d'un système à pignon et crémaillère commandé par le mouvement vertical du porte-outil. Un tel dispositif a, par exemple, été décrit dans le brevet DE N° 357 354 déposé le 7 décembre 1920 au nom de ALBRECHT.

Toutefois, les dispositifs de ce genre exigent en général une modification de certains éléments de la presse, ce qui constitue un inconvénient.

Il a été proposé également d'utiliser le mouvement de rapprochement des deux plateaux de la presse pour faire tourner l'un des deux éléments, vis ou écrou, d'un système réversible à vis et écrou et de faire entraîner en rotation, à partir de cet élément, une broche rotative porte-taraud.

De tels dispositifs ont été décrits par exemple dans le brevet CH N° 490 920 au nom de SEIKO ou dans le brevet US 3 162 873 au nom de OHME.

Mais ces dispositifs présentaient une structure compliquée et de grande hauteur, avec de nombreuses pièces mobiles coulissantes, ce qui obligeait à une construction très lourde, donc coûteuse. En effet, tout le mécanisme constitué notamment par le système vis/écrou réversible, par la broche rotative porte-taraud et par la transmission à engrenages entre ce système et cette broche était monté dans un bloc-outil unique monté sur le porte-outil supérieur de la presse. Ce bloc-outil unique devait donc comporter un plateau coulissant, avec des colonnes de guidage de forte section, et nécessitait une construction précise, donc coûteuse, pour éviter tout risque de coincement.

Au surplus, le retrait du taraud, à la remontée de la presse, ne pouvait pas être commandé positivement par la remontée du plateau de presse. On devait prévoir de puissants ressorts de rappel, enroulés autour des colonnes précitées, pour repousser le plateau coulissant du bloc-outil unique et produire l'entraînement en sens inverse du système vis/écrou et du porte-taraud. L'obligation de ces ressorts de rappel rendait encore la construction du dispositif plus lourde et plus coûteuse (voir notamment US-A-3 162 873).

On connaît enfin par le brevet britannique 931 445, un dispositif automatique de taraudage sur presse mécanique à découper ou à emboutir qui comporte un porte-outil supérieur et un porte-outil inférieur ledit dispositif comportant un premier bloc adapté à être monté sur le porte-outil supérieur, une broche rotative porte-taraud tourillonnant dans ledit premier bloc, un système vis/écrou réversible à deux éléments, l'écrou de ce système étant monté de manière à tourner librement dans ledit premier bloc, une transmission sans glissement reliant l'écrou à la broche rotative porte-taraud pour entraîner celle-ci en rotation, lors du coup de presse, quand le porte-outil supérieur descend un second bloc adapté à être monté sur le porte-outil inférieur de la presse, la vis dudit système à vis/écrou étant fixée rigidement dans ledit second bloc, un mandrin de serrage du taraud monté dans la broche rotative porte-taraud de manière telle qu'il puisse coulisser axialement dans celle-ci tout en étant lié en rotation avec elle, un ressort sollicitant axialement le mandrin de serrage du taraud vers le second bloc, et une butée propre à limiter l'amplitude du mouvement de coulissement axial du mandrin de serrage du taraud dans la broche.

Dans le mode de réalisation représenté dans ce brevet britannique, un outil inférieur et un outil supérieur sont fixés, respectivement, sur la table et sur le coulisseau de la presse. Une broche rotative verticale fait partie d'un ensemble porté par l'outil inférieur et le taraud est monté dans celle des deux extrémités de cette broche qui est la plus éloignée de l'outil supérieur, la broche et l'outil supérieur étant situés, tous les deux, du même côté de la pièce à usiner, à savoir : le côté supérieur de celle-ci. Une telle disposition oblige à prévoir, dans l'outil inférieur, des moyens pour permettre à la broche porte-taraud de coulisser verticalement par rapport à la pièce à usiner dont l'emplacement en hauteur est fixe par rapport à l'outil inférieur de la presse ; cela se traduit évidemment par la présence de tout un ensemble de pièces. Par ailleurs, étant donné qu'il n'y a pas de liaison axiale verticale entre le taraud et l'outil supérieur, il est nécessaire de prévoir des moyens particuliers pour dégager le taraud de la pièce vers le haut, en fin d'opération de taraudage, lorsque l'outil supérieur retrouve sa position haute ; ces moyens comportent, notamment, un plateau lié axialement au taraud, des têtes de soulèvement de ce plateau, et des ressorts. Il est clair que l'ensemble d'une telle structure est compliqué et coûteux ; de plus, la présence de nombreux organes coulissant les uns par rapport aux autres, est une source de coincements.

Le but de la présente invention est de réaliser un dispositif de taraudage sur presse qui ne présente pas les inconvénients précités des dispositifs qu'on vient de rappeler plus haut.

A cet effet, le dispositif suivant l'invention, qui est du genre de celui décrit dans le brevet britannique précité, s'en différencie par le fait que le mandrin de serrage du taraud est monté dans celle des deux extrémités de la broche rotative porte-taraud qui fait face au second bloc, et en ce que le ressort de sollicitation axiale du taraud est monté à l'intérieur de la broche rotative porte-taraud.

On peut ainsi réaliser un dispositif dont la structure est beaucoup plus simple que celle du dispositif du brevet britannique en question, car il ne nécessite plus la présence des moyens particuliers dont il a été question plus haut, notamment par le fait que le taraud se dégage naturellement de la pièce, à la fin du mouvement ascendant du bloc supérieur.

On remarquera que le dispositif suivant l'invention présente le gros avantage de pouvoir se fixer sur les porte-outils de la presse, c'est-à-dire sans nécessiter la moindre modification à la machine. De plus, il est plus simple et moins encombrant que les dispositifs connus. Enfin, il permet, le cas échéant, d'entraîner plusieurs broches de taraudage, comme il est revendiqué dans la revendication 2.

L'invention sera mieux comprise à la lecture de la description qui va suivre et à l'examen des dessins annexés qui montrent, à titre d'exemple, un mode de réalisation de l'invention. Sur ces dessins :

la figure 1   est une coupe verticale de l'ensemble du dispositif, faite suivant la ligne I-I de la figure 2 et

la figure 2   est une coupe horizontale faite suivant la ligne II-II de la figure 1.

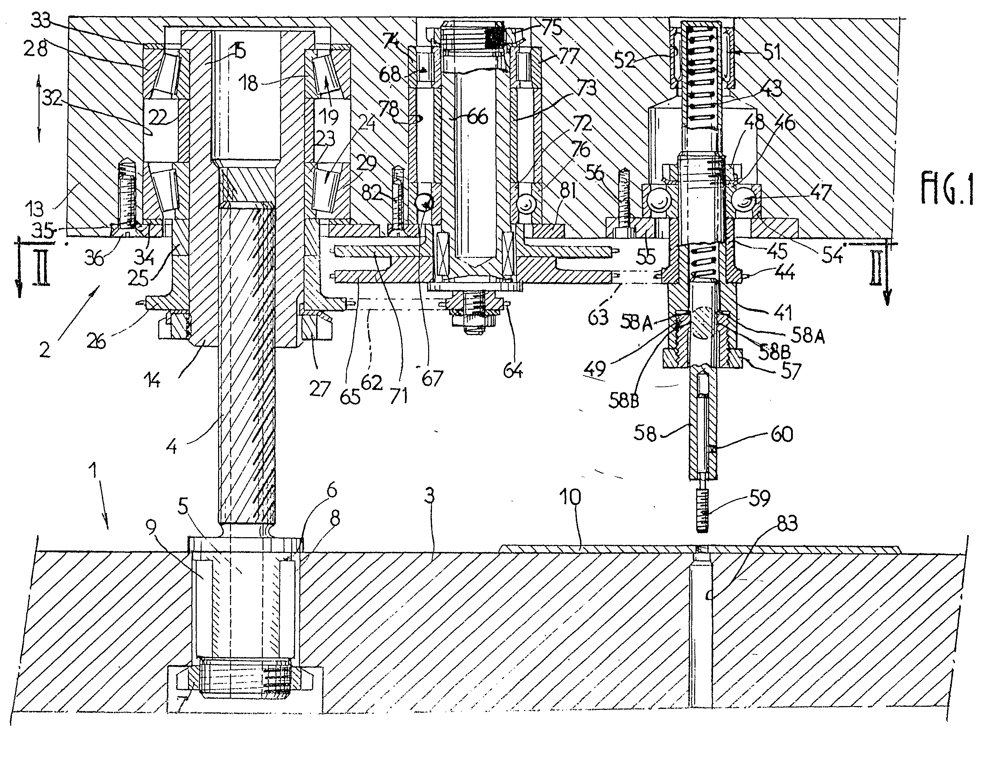

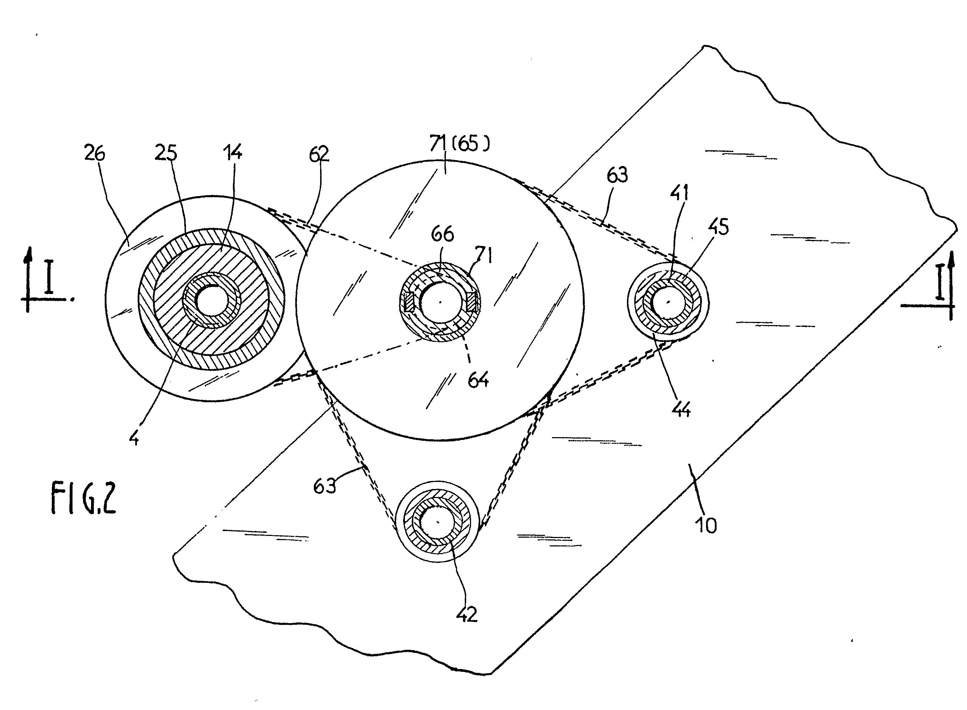

Le dispositif automatique de taraudage sur presse mécanique représenté sur les figures 1 et 2 est constitué d'une unité inférieure désignée dans son ensemble par 1 et une unité supérieure désignée dans son ensemble par 2.

L'unité inférieure 1 comporte un bloc 3 à monter sur le porte-outils inférieur d'une presse à découper. Dans le bloc 3, est fixée une vis verticale 4 dont l'extrémité inférieure est, à cet effet, munie d'un pied épaulé 5 engagé dans un alésage 6 du bloc 3 dans lequel il est fixé par un écrou 7 vissé sur l'extrémité filetée de l'extrémité dudit pied. Deux clavettes 8, 9, engagées dans des rainures correspondantes de l'alésage 6 et du pied 5 de la vis, empêchent positivement cette dernière de tourner autour de son axe par rapport au bloc 3. La vis 4 est du type dit « réversible », c'est-à-dire que son pas est très grand, en d'autres termes, que l'angle de l'hélice de ses filets est d'au moins de 45°, dans l'exemple, il est de 70°. L'axe de la vis 4 étant vertical, il est donc parallèle à la direction du mouvement périodique de rapprochement et d'éloignement des deux unités 1, 2 l'une de l'autre.

L'unité supérieure 2 comporte un bloc 13 à monter sur le porte-outils supérieur de la presse. Dans ce bloc 13, sont montés à rotation différents organes ; tout d'abord un écrou 14 conjugué de la vis 4 et engagé sur celle-ci. Sur cet écrou en forme de douille épaulée 15, sont enfilés successivement : la bague intérieure 18 d'un roulement à rouleaux coniques 19, une bague entretoise 22, la bague intérieure 23 d'un autre roulement à rouleaux coniques 24, une autre bague entretoise 25 et le moyeu d'une roue dentée à chaîne 26, l'ensemble de toutes ces pièces étant bloqué sur la douille 15 au moyen d'un écrou 27. Les bagues extérieures 28, 29 des deux roulements 19, 24 sont logées dans un alésage 32 du bloc 13, contre des rondelles d'épaisseurs calibrées 33, 34, cette dernière étant retenue par une plaque annulaire de fermeture 35 fixée dans un chambrage de la face inférieure du bloc 13 au moyen de vis 36.

Dans le bloc 3 sont aussi montées à rotation deux broches porte-taraud 41, 42 identiques. Sur la broche 41, également en forme de douille épaulée, sont enfilés successivement : le moyeu d'un pignon denté à chaîne 44, la bague intérieure 46 d'un roulement à billes 47 à gorges profondes, le tout étant serré par un écrou 48. La partie supérieure de la broche porte-taraud 41 est centrée dans un roulement à aiguilles 51 logé dans un évidement correspondant 52 du bloc 13. La bague extérieure 45 du roulement 47 est retenue dans un alésage 54 du bloc 13 par une plaque annulaire de fermeture 55 fixée au moyen de vis 56.

Un mandrin 58, dans lequel le taraud 59 est fixé au moyen d'une vis de pression 60, peut coulisser dans l'alésage cylindrique de la broche 41 ; il est sollicité vers le bas par un ressort hélicoïdal 43 dont une extrémité s'appuie contre ledit mandrin et l'autre extrémité dans le fond supérieur fermé de la broche 41. La course axiale du mandrin 58 est limitée vers le bas, par l'entrée en contact de deux épaulements 58A formés par deux méplats 58B dudit mandrin, avec une butée réglable constituée par la face supérieure d'une bague filetée 49 vissée dans la partie inférieure de la broche 41 et immobilisée dans celle-ci dans toute position convenable au moyen d'un contre-écrou 57. La partie supérieure de la bague filetée 49 présente un jour dont la section a une forme complémentaire de celle de la section circulaire (représentée en coupe en traits interrompus sur la figure 1) de la partie inférieure du mandrin 58 avec ses deux méplats 58B, ce qui assure un entraînement positif en rotation dudit mandrin par la broche 41.

La roue dentée 26 montée sur l'écrou 14 et le pignon denté 44 monté sur la broche porte-taraud 41 sont reliés par une transmission desmodromique qui comporte deux chaînes 62, 63 passant respectivement sur ces deux éléments dentés, ainsi que sur un autre pignon denté 64 et sur une autre roue dentée 65 fixée sur un arbre intermédiaire 66 également monté à rotation dans le bloc 13 au moyen d'un roulement à billes 67 et d'un roulement à galets cylindriques 68. L'arbre intermédiaire 66 est réalisé sous la forme d'une douille épaulée borgne sur laquelle sont enfilés successivement : la roue dentée 65, une autre roue dentée 71 (pour l'entraînement de l'autre broche porte-taraud 42 d'une manière analogue à l'entraînement de la broche porte-taraud 41 au moyen de la roue dentée 65, de la chaîne 63 et du pignon denté 44), la bague intérieure 72 du roulement à billes 67, une bague entretoises 73 et la bague intérieure 74 du roulement à billes 68, l'ensemble étant serré par un écrou 75 vissé sur l'extrémité supérieure filetée de l'arbre intermédiaire 66. Les bagues extérieures 76, 77 des deux roulements 67, 68 sont logées dans un alésage 78 du bloc 13, fermé par une plaque annulaire 81 fixée par des vis 82.

Dans le bloc inférieur 3, est percé un trou 83 de dégagement du taraud et d'évacuation de copeaux au droit de l'axe de la broche porte-taraud portée par le bloc supérieur 13.

La vis de commande 4, les broches porte-taraud 41, 42, et l'arbre intermédiaire 66 sont réalisés sous forme tubulaire pour être plus légères et plus faciles à refroidir. Leurs axes sont tous verticaux et, par conséquent, parallèles.

Le fonctionnement du dispositif est extrêmement simple. A chaque coup de presse, l'unité supérieure 2 commence par descendre, l'écrou 14 engagé sur la vis fixe 4 est obligé de tourner et, dans son mouvement de rotation entraîne, par l'intermédiaire de la transmission à chaîne 62, l'arbre intermédiaire 66 qui, à son tour, par l'intermédiaire des transmissions par chaînes telles que 63, fait tourner les deux broches porte-taraud 41, 42. Le rapport de multiplication de la transmission par chaînes 62, 63 est choisi en tenant compte, à la fois, de la valeur du pas de la vis réversible de commande 4 et du pas du taraud 59, de manière telle que la descente du porte-outils supérieur de la presse tende à faire descendre le taraud à une vitesse linéaire un peu plus grande que la vitesse axiale qui lui serait communiquée par le simple fait qu'il se visse dans le trou de la pièce qu'il est en train de tarauder. Ainsi, dès que le taraud entre en contact avec l'entrée du trou de la pièce, il commence par remonter un peu dans la broche rotative 41, ou, plus exactement, il commence par être ralenti dans son mouvement de descente, alors que la broche continue à descendre à la vitesse du porte-outils supérieur, de sorte que le ressort se comprime ; dès lors, le taraud descend à sa vitesse propre, déterminée par son pas, qui est plus faible que la vitesse de descente de la broche. L'opération de taraudage s'effectue, puis, le porte-outils supérieur de la presse remonte à une vitesse plus grande que celle du taraud qui se dévisse de la pièce sous l'action de la transmission par chaînes entraînée par l'écrou 14 qui tourne en sens inverse de celui que lui avait imprimé la vis lors de la course de descente du porte-outils. Pendant la course de remontée du porte-outils, le ressort 43 s'allonge en compensant la différence des vitesses du porte-outils et du taraud.

Le bloc inférieur est logé au niveau des blocs des autres outils inférieurs (non représentés) montés sur la presse, de manière telle qu'une bande de tôle puisse progresser successivement sur les différents outils pour y subir les opérations nécessaires telles que, par exemple : poinçonnage, emboutissage des trous, taraudage, cambrage, etc. A chaque coup de presse, il tombe une ou plusieurs pièces finies sans que l'opération de taraudage n'ajoute un temps supplémentaire dans le cycle de travail de la machine.

Etant donné que les bandes de tôle reposent et avancent sur l'outil inférieur, il semble tout indiqué de monter le taraud sur l'outil supérieur ; toutefois, dans des applications particulières, on pourrait adopter la disposition inverse, si c'était nécessaire. On pourrait, par ailleurs, au lieu de faire tourner l'écrou de commande 14 sur une vis fixe 4, faire tourner la vis dans l'écrou fixe, la vis étant alors montée dans l'unité qui porte le taraud.

Par ailleurs, à titre de variante, on pourrait concevoir un dispositif dans lequel la vitesse propre du taraud serait, contrairement à l'hypothèse envisagée dans l'exemple décrit plus haut, plus grande que la vitesse verticale du porte-outils ; le montage du ressort de compensation étant alors évidemment inversé. On pourrait envisager aussi de centrer le taraud en direction axiale, à mi-course, entre deux ressorts antagonistes, ou bien prévoir un ressort à course réglable. Tous ces montages avec ressort permettent de tarauder éventuellement des trous à des pas différents, si besoin est sur la même pièce, avec le même outillage, sans avoir à changer les rapports de la transmission. Enfin, dans une variante très spécialisée, on pourrait même envisager de supprimer complètement le ressort de compensation, mais une mise au point minutieuse s'imposerait pour éviter des bris de tarauds.

### Revendications

1. Dispositif automatique de taraudage sur presse mécanique à découper ou à emboutir qui comporte un porte-outil supérieur (2) et un porte-outil inférieur (1) ledit dispositif comportant un premier bloc (13) adapté à être monté sur le porte-outil supérieur, une broche rotative porte-taraud (41) tourillonnant dans ledit premier bloc (13), un système vis/écrou réversible à deux éléments (14, 4), l'écrou (14) de ce système étant monté de manière à tourner librement dans ledit premier bloc (13), une transmission sans glissement (62, 63) reliant l'écrou (14) à la broche rotative porte-taraud pour entraîner celle-ci en rotation lors du coup de presse, quand le porte-outil supérieur (2) descend, un second bloc (3) adapté à être monté sur le porte-outil inférieur de la presse, la vis (4) dudit système à vis/écrou étant fixée rigidement dans ledit second bloc (3), un mandrin (58) de serrage du taraud (59) monté dans la broche rotative porte-taraud (41) de manière telle qu'il puisse coulisser axialement dans celle-ci tout en étant lié en rotation avec elle, un ressort (43) sollicitant axialement le mandrin de serrage du taraud vers le second bloc, et une butée (58 A) propre à limiter l'amplitude du mouvement de coulissement axial du mandrin de serrage du taraud dans la broche, caractérisé en ce que le mandrin (58) de serrage du taraud (59) est monté dans celle des deux extrémités de la broche rotative porte-taraud (41) qui fait face audit second bloc (3), et en ce que le ressort (43) de sollicitation axiale du taraud est monté à l'intérieur de la broche rotative porte-taraud.

2. Dispositif suivant la revendication 1, caractérisé en ce qu'il comporte au moins une autre broche rotative porte-taraud (42) semblable à la broche précitée (41) et semblablement disposée, et en ce que la transmission précitée comporte deux parties, à savoir : une première partie commune (62) qui relie l'écrou (14) du système vis/écrou à un arbre intermédiaire (66) et une deuxième partie (63) qui relie cet arbre intermédiaire à la broche rotative porte-taraud (41), chacune des broches rotatives porte-taraud supplémentaires (42) étant reliée aussi à l'arbre intermédiaire par une partie de transmission (63) semblable à la deuxième partie de transmission précitée.

## Claims

1. Automatic thread tapping device on a mechanical cutting or flanging press comprising an upper tool holder (2) and a lower tool holder (1), said device comprising a first block (13) for fitting to the upper tool holder, a rotary tapping spindle (41) rotating in said first block (13), a reversible screw/nut system with two elements (14, 4), the nut (14) of said system being mounted so that it can freely rotate in said first block (13), a non-sliding drive (62, 63) connecting the nut (14) to the rotary tapping spindle in order to rotate the same, during the press stroke when the upper toolholder (2) drops, a second block (3) for fitting to the lower toolholder (1) of the press, the screw (4) of said screwed/nut system being rigidly fixed in said second block (3), a chuck (58) for clamping the tap (59) mounted in the rotary tapping spindle (41) in such a way that it can axially slide therein, whilst being linked in rotation therewith, a spring (43) axially pulling the tap clamping chuck towards the second block and an abutment (58a) able to limit the amplitude of the axial sliding movement of the tap clamping chuck in the spindle, characterized in that the chuck (58) for clamping the tap (59) is mounted in the one of the two ends of the rotary tapping spindle (41) facing the second block (3) and in that the spring (43) for axially pulling the tap is mounted within the rotary tapping spindle.

2. Device according to claim 1, characterized in that it comprises at least one other rotary tapping spindle (42) like the aforementioned spindle (41) and arranged in the same way and in that the aforementioned drive has two portions, namely a first common portion (62) connecting the nut (14) of the screw/nut system to an intermediate shaft (66) and a second portion (63), connecting the intermediate shaft to the rotary tapping spindle (41), each of the supplementary rotary tapping spindles (42) also being connected to the intermediate shaft by a drive portion (63) like the aforementioned second drive portion.

## Patentansprüche

1. Automatische Gewindebohrvorrichtung an mechanischen Pressen zum Stanzen oder Tiefziehen mit einem oberen Werkzeughalter (2) und einem unteren Werkzeughalter (1), welche Vorrichtung besitzt einen ersten Block (13), der auf dem oberen Werkzeughalter angebracht werden kann, eine drehbare Gewindebohrerhalterspindel (41), die sich in dem ersten Block (13) dreht, ein umkehrbares Schrauben-Muttergetriebe aus zwei Elementen (14, 4), wobei die Mutter (14) dieses Getriebes zur freien Drehung in dem ersten Block (13) gelagert ist, ein rutschfestes Getriebe (62, 63), welches die Mutter (14) mit der drehbaren Gewindebohrerhalterspindel verbindet, um diese zur Drehung anzutreiben beim Hub der Presse, wenn sich der obere Werkzeughalter (2) abwärts bewegt, einen zweiten Block (3), der auf dem zweiten Werkzeughalter der Presse angeordnet werden kann, wobei die Schraube (4) des Schrauben-Muttergetriebes starr in dem zweiten Block (3) befestigt ist, ein Bohrfutter (58) des Gewindebohrers (59), das in der drehbaren Gewindebohrerhalterspindel (41) so gelagert ist, daß es in diesem axial gleiten kann, jedoch drehfest mit dieser verbunden ist, eine Feder (43), welche das Spannfutter des Gewindebohrers zum zweiten Block axial belastet, und einen Anschlag (58A) zur Begrenzung der Amplitude der axialen Gleitbewegung des Spannfutters des Gewindebohrers in der Spindel, dadurch gekennzeichnet, daß das Bohrfutter (58) des Gewindebohrers (59) in demjenigen der beiden Enden der drehbaren Gewindebohrerhalterspindel (41), das dem zweiten Block (3) gegenüberliegt, befestigt ist, und daß die Feder (43) zur axialen Belastung des Gewindebohrers im Inneren der Gewindebohrerhalterspindel angeordnet ist.

2. Vorrichtung nach Anspruch 1, dadurch gekennzeichnet, daß mindestens eine weitere drehbare Gewindebohrerhalterspindel (42) der vorerwähnten Spindel (41) ähnlich und ähnlich angeordnet ist und daß das vorerwähnte Getriebe zwei Teile aufweist, nämlich : einen ersten gemeinsamen Teil (62), der die Mutter (14) de Schrauben-Muttergetriebes mit einer Zwischenwelle (66) verbindet, und einen zweiten Teil (63), der die Zwischenwelle mit der Gewindebohrerhalterspindel (41) verbindet, wobei jede der drehbaren Gewindebohrerhalterspindeln (42) ferner mit der Zwischenwelle durch einen Getriebeteil (63) verbunden ist, der dem vorerwähnten zweiten Getriebeteil ähnlich ist.

FIG.1

FIG.2